# EUROPEAN PATENT SPECIFICATION

(11) **EP 2 294 319 B1**
(45) Date of publication and mention of the grant of the patent: **09.05.2018**
(21) Application number: 09755144.4
(22) Date of filing: 19.05.2009
(51) Int. Cl.: F04B 17/05, F04B 49/06, F02D 41/02, F02D 29/04, F16D 48/06

(54) **HYDRAULIC DEVICE CONTROL**
STEUERUNG EINER HYDRAULISCHEN VORRICHTUNG
COMMANDE D'UN DISPOSITIF HYDRAULIQUE

(30) Priority: 29.05.2008 SE 0801260
(43) Date of publication of application: 16.03.2011
(73) Proprietor: Scania CV AB (publ), 151 87 Södertälje (SE)
(72) Inventor: SVENSSON, Martin, S-113 46 Stockholm (SE)
(74) Representative: Scania CV AB
(86) International application number: PCT/SE2009/050568
(87) International publication number: WO 2009/145706

(56) References cited:
- US-A- 4 332 531
- US-A- 5 944 492
- US-A- 6 010 309
- US-A1- 2005 160 727
- US-A1- 2006 056 978
- US-A1- 2007 204 604

## Description

### TECHNICAL FIELD

The present invention relates to a method and an apparatus for controlling a hydraulic device powered by a hydraulic system of a heavy vehicle. In particular the present invention relates to a method and apparatus for controlling a hydraulic device of a heavy vehicle where the engine powers a hydraulic pump for driving a hydraulic device.

### BACKGROUND

Heavy vehicles can in many cases be provided with a hydraulic system driving a hydraulic device built on or connected to the heavy vehicle. An example is a truck provided with a body work such as a hydraulically powered crane.
The engine of the heavy vehicle is adapted to power one or many hydraulic pumps which in turn generate a hydraulic flow that powers one or more hydraulic devices of the heavy vehicle. Conventional systems for controlling the engine typically strive to maintain a preset speed of the engine when the hydraulic device is used, see e.g. US-2005/0160727-A1. There is a constant desire to reduce fuel consumption of heavy vehicles including heavy vehicles having an engine powering hydraulic devices. At the same time there is a desire to provide a high power when driving a hydraulic device. Hence there exists a need for a control method which can provide high power to a hydraulic device of a heavy vehicle, but which at the same time keeps fuel consumption low and without risk for stalling the engine.

### SUMMARY

It is an object of the present invention to provide a method and a system that provides an improved hydraulic device control of a heavy vehicle provided with a hydraulically driven device.

This object and others are obtained by the method, device and computer program product as set out in the appended claims. Thus, in order to eliminate or reduce the risk of stalling an engine used to power a motorized vehicle and a hydraulic device of the vehicle such a body work of a truck for example a hydraulic crane or the like, the control method invokes a safety margin when controlling the hydraulic device. The current maximum torque that the engine can deliver is continuously monitored along with the current torque demand. The control signal to the hydraulic device is then controlled in response to the difference between the maximum torque and the torque demand. Hereby it is possible to invoke a suitable torque safety margin preventing the engine from stalling, which would be the result if the torque demand would exceed the maximum torque available.

The safety margin is also dependent on the current engine speed. Hereby the control can take into account information about the current engine speed when setting the torque safety margin.

Using the method and system as described herein will provide an improved control of a hydraulic device of a motorized vehicle provided with a hydraulic device such as a truck provided with a crane or a front loader or any other motorized vehicle having an engine driving a hydraulic pump for powering a hydraulic device. By continuously monitoring the torque demand and comparing the current torque demand with the maximum torque at the current engine point of operation as determined by the engine speed and a current turbo pressure if applicable and controlling the output signal to a hydraulic device in response to the torque possible to deliver at a given time the risk of stalling the engine is eliminated or greatly reduced.

### BRIEF DESCRIPTION OF THE DRAWINGS

The present invention will now be described in more detail by way of nonlimiting examples and with reference to the accompanying drawings, in which:
- Fig. 1a is a general view of a system for controlling the engine speed of a motor vehicle provided with a hydraulically driven device,
- Fig. 2 is a flowchart illustrating steps performed when controlling the engine speed of a motor vehicle provided with a hydraulically driven device.
- Fig 3 is a view of a controller for controlling a hydraulic device, and
- Fig. 4 is a flowchart illustrating steps performed controlling the control signal to a hydraulic device.

### DETAILED DESCRIPTION

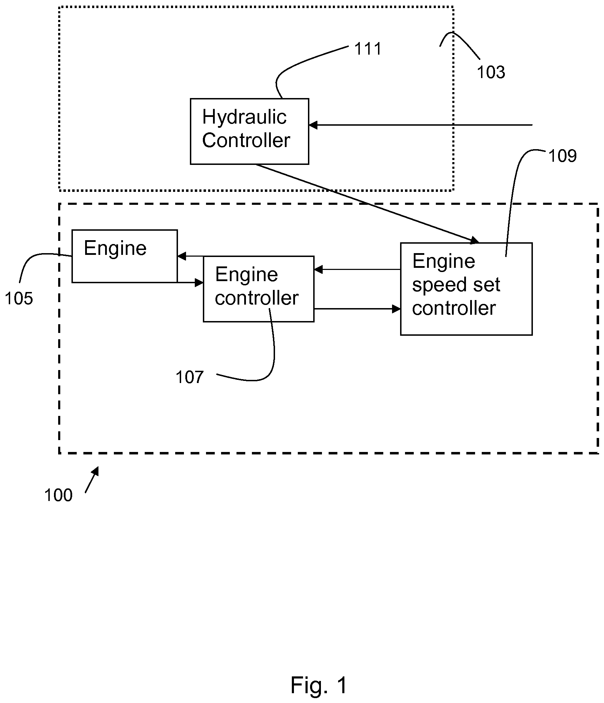

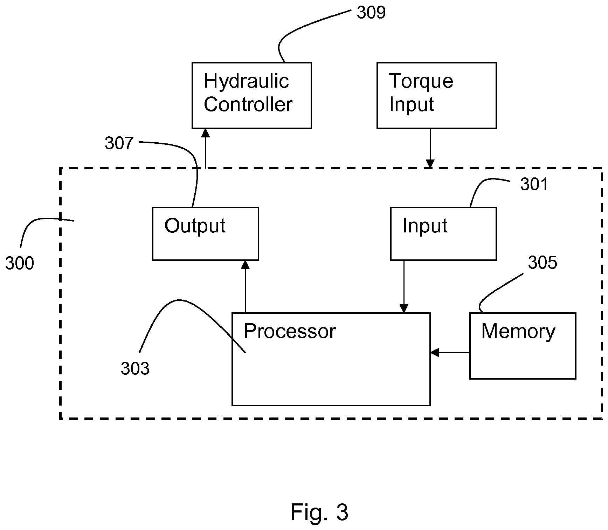

In Fig.1 a view of a system 100 for controlling the engine speed of an engine 105 powering a vehicle provided with a hydraulic device 103 is depicted. The system comprises a control module 109 for controlling the speed of the engine 105. The control module 109 is programmed to receive real time control signals from an engine controller 107 such as an Electronic Control Unit (ECU) and to provide signals indicative of a current engine operational conditions. The control module 109 is also connected to a controller 111 for controlling the hydraulic device 103. The controller 111 is adapted to control the hydraulic device in accordance with user input signals received from a user for example using a control device shown in Fig. 3.
The control module 109 receives signals from the controller 111 indicative of a currently demanded engine speed to drive the hydraulic device 103. In accordance with one embodiment the controller emits a signal indicative of the current demanded flow in the hydraulic device 103. The control module is then programmed to convert the demanded flow to a pre-set engine speed for example using a look-up table. In accordance with another embodiment the controller 111 is adapted to emit a signal indicative of a demanded engine speed required for the demanded flow in the hydraulic device.
Using the signals from the engine controller 107 and the hydraulic controller 111 the control module 109 continuously sets the engine speed in response to at least both signals from the engine and the hydraulic device. In accordance with the invention the engine speed is set to the highest of the engine speeds indicated by the engine controller signal and the hydraulic controller signal.
For example if the signal from the engine controller indicates that the engine set speed should be 800 rpm and the demanded flow in the hydraulic device indicates that the engine set speed should be 900 rpm the controller module 109 sets the engine speed to the highest of the two, in this example the engine speed would be set to 900 rpm.

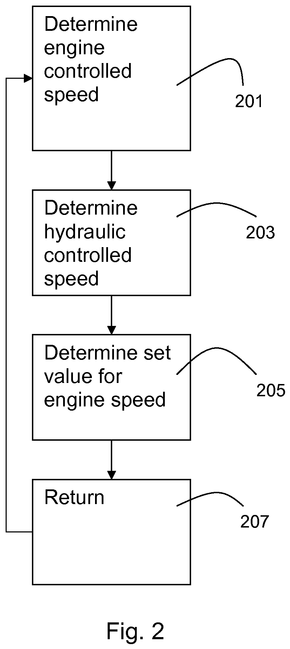

In Fig. 2 a flow chart Illustrating some procedural steps performed when controlling the engine speed of motorized vehicle provided with a hydraulic device is shown. First in a step 201 an engine controlled engine speed as determined from engine signals is determined. Next in a step 203 a hydraulic controlled engine speed as determined from the currently requested flow in the hydraulic device is determined. Thereupon, the engine speed is set to a value in response to the engine speeds determined in steps 201 and 203. In particular the set value for the engine speed is set to the highest of the engine speeds determined in steps 201 and 203. Next, the procedure returns to step 201 to continuously update the engine speed in a step 207.

When a hydraulic device of a heavy vehicle is operated, for example in accordance with the above, the demanded torque resulting from the control signals from the hydraulic control device may result in a torque demand that results in that the engine stalls. This is of course not desired and should be avoided. In accordance with the present invention a controller for providing control signals to the hydraulic device is adapted to generate control signals in response to a currently available torque margin.

In Fig. 3 an exemplary controller 300 for controlling a hydraulic device of a heavy vehicle is shown. The device 300 comprises an input port 301 for receiving a signal indicative of the currently demanded torque. The controller 300 also receives the current engine speed via the input port 301. The controller 300 further comprises a memory 303 where the maximum torque for any given engine speed is stored. In accordance with another embodiment the controller can receive the maximum torque via a CAN-bus from the engine control unit. In accordance with one embodiment the controller receives a reference torque value corresponding to the maximum torque that the engine can generate, the percentage currently used of the maximum torque, and the percentage of the torque currently available at the current point of operation of the engine for the ECU via a CAN bus. The controller 300 also comprises a processor unit 305 connected to the input port 301 and to the memory 303. The processor unit 305 is adapted to continuously compare the currently demanded torque with the maximum torque for the current engine point of operation. The processor unit is further adapted to provide an output signal controlling a hydraulic controller 309 via an output port 307. The control signal to the hydraulic controller is correlated to the comparison of the maximum torque and the demanded torque. The output signal to the hydraulic controller controls the gain of the control signals to the hydraulic device.

For example in accordance with one embodiment if the torque demand at any given time is above the maximum torque possibly adjusted by a safety margin, the processor unit is adapted to output a signal "0" whereby the control signals from the hydraulic controller 309 is temporarily stopped. In accordance with another embodiment the output signal from the controller is a scaled signal dependent on the difference between the current maximum torque and the torque demand.

For example if the difference between the current maximum torque and the torque demand is above a first threshold value the hydraulic controller can use a normal output signal. In accordance with one embodiment, if the if the difference between the current maximum torque and the torque demand is below a second threshold value, the control signals from the hydraulic controller 309 is temporarily stopped. If the difference between the current maximum torque and the torque demand is above a first threshold value below a second threshold value, the output signal from the hydraulic controller can be down scaled. For example the signal can be down scaled in proportion to how close to the second threshold value the difference is.

The controller 300 can also take other parameters into consideration when determining the output signal to the hydraulic controller 309. For example the controller can take the current engine speed into account and is the engine is running at a high speed the torque demand can be allowed to be closer to the maximum torque before reducing the output signal from the hydraulic controller. Thus, the safety margin used for keeping the engine from stalling can be made dependent on the current engine speed.

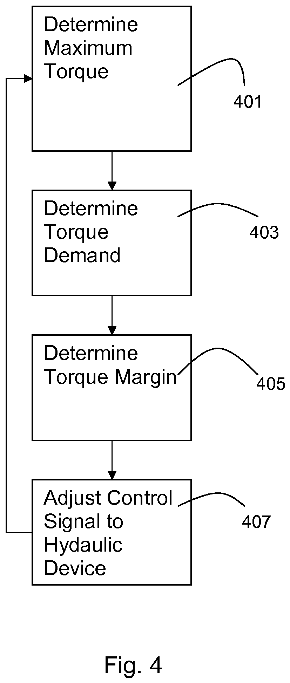

In Fig. 4, a flow chart illustrating some procedural steps performed when controlling the control signal to a hydraulic device in accordance with the above is show. First, in a step 401, maximum torque that the engine currently can deliver is determined. Next, in a step 403, the current torque demand is determined. Thereupon, in a step 405, the current maximum torque is compared with the current torque demand and the difference between the current maximum torque and the torque demand is determined, i.e. the torque margin. Next, in a step 407, the control signal to the hydraulic device is adjusted in response to the comparison made in step 405 so that the control signal to the hydraulic device is controlled in response to the torque margin. The adjustment of the control signal, if any, to the hydraulic device can be made in any suitable manner for example using any of the control strategies described above. The procedure then returns to step 401 .

The control method as described herein can advantageously be computer implemented and the control algorithm can be stored as programmed instructions in a computer program stored on a digital storage medium.

Using the method and system as described herein will provide an improved control of a hydraulic device of a motorized vehicle provided with a hydraulic device such as a truck provided with a crane or a front loader or any other motorized vehicle having an engine driving a hydraulic pump for powering a hydraulic device. By continuously monitoring the torque demand and comparing the current torque demand with the maximum torque at the current engine speed and controlling the output signal to a hydraulic device in response to the torque possible to deliver at a given time the risk of stalling the engine is eliminated or greatly reduced.

## Claims

1. A method of controlling a control signal to a hydraulic device (103) of a motorized vehicle comprising an engine (105), the hydraulic device (103) being driven by a hydraulic pump powered by the engine (105), the method **characterised by** comprising the steps of:
- determining a current maximum torque that the engine (105) currently can deliver,
- determining a current torque demand, and
- continuously controlling the control signal to the hydraulic device (103) in response to the difference between the maximum torque and the torque demand, and
- continuously controlling the control signal in response to the current engine speed, being the highest of the engine speed indicated by the engine controller signal and the engine speed indicated by the hydraulic controller signal starting from the present demanded flow in the hydraulic device (103), thus by comparison with a safety margin preventing the engine (105) from stalling.

2. The method according to claim 1, wherein if the difference between the maximum torque and the torque demand is below a threshold value the control signal to the hydraulic device (103) is suspended.

3. The method according to claim 1 or 2, wherein if the difference between the maximum torque and the torque demand is below a threshold value the control signal to the hydraulic device (103) is down scaled.

4. The method according to claim 3, wherein the control signal is down scaled in proportion to the difference between the maximum torque and the torque demand.

5. The method according to any of claims 2 - 4 wherein the threshold values are dependent on the current engine speed.

6. A controller for controlling a control signal to a hydraulic device (103) of a motorized vehicle comprising an engine (105), the hydraulic device (103) being driven by a hydraulic pump powered by the engine (105), the controller **characterised by** (111) comprising:
- means for receiving a current maximum torque that the engine (105) currently can deliver,
- means for receiving a current torque demand, and
- means for continuously controlling the control signal to the hydraulic device (103) in response to the difference between the maximum torque and the torque demand, and
- means for continuously controlling the control signal in response to the current engine speed, being the highest of the engine speed indicated by the engine controller signal and the engine speed indicated by the hydraulic controller signal starting from the present demanded flow in the hydraulic device (103), thus by comparison with a safety margin preventing the engine (105) from stalling.

7. The controller according to claim 6, comprising means for suspending the control signal to the hydraulic device (103) if the difference between the maximum torque and the torque demand is below a threshold value.

8. The controller according to claim 6 or 7, comprising means for down scaling the control signal to the hydraulic device (103) if the difference between the maximum torque and the torque demand is below a threshold value.

9. The controller according to claim 8, further comprising means for down scaling the control signal to the hydraulic device (103) in proportion to the difference between the maximum torque and the torque demand.

10. The controller according to any of claims 8-9, further comprising means for setting the threshold values dependent on the current engine speed.

11. A computer program product for controlling a control signal to a hydraulic device (103) of a motorized vehicle comprising an engine (105), the hydraulic device (103) being driven by a hydraulic pump powered by the engine (105), wherein the computer program product comprises program segments that when executed on a computer causes the computer to perform the steps of:
- determining a current maximum torque that the engine (105) currently can deliver,
- determining a current torque demand, and
- continuously controlling the control signal to the hydraulic device (103) in response to the difference between the maximum torque and the torque demand, and
- continuously controlling the control signal in response to the current engine speed, being the highest of the engine speed indicated by the engine controller signal and the engine speed indicated by the hydraulic controller signal starting from the present demanded flow in the hydraulic device (103), thus by comparison with a safety margin preventing the engine (105) from stalling.

12. The computer program product according to claim 11, further comprising program segments for suspending the control signal to the hydraulic device (103) if the difference between the maximum torque and the torque demand is below a threshold value.

13. The computer program product according to claim 11 or 12, further comprising program segments for down scaling the control signal to the hydraulic device (103) if the difference between the maximum torque and the torque demand is below a threshold value.

14. The computer program product according to claim 13, further comprising program segments for down scaling the control signal to the hydraulic device (103) in proportion to the difference between the maximum torque and the torque demand.

15. The computer program product according to any of claims 12 -14 further comprising program segments for setting the threshold values dependent on the current engine speed.

16. A digital storage medium having the computer program product according to any of claims 11 - 15 stored thereon.

## Patentansprüche

1. Verfahren zum Steuern eines Steuersignals an eine hydraulische Vorrichtung (103) eines Kraftfahrzeugs, das einen Motor (105) umfasst, wobei die hydraulische Vorrichtung (103) von einer hydraulischen Pumpe betrieben wird, die von dem Motor (105) angetrieben wird, wobei das Verfahren **dadurch gekennzeichnet ist, dass** es die Schritte umfasst:
- Bestimmen eines aktuellen maximalen Moments, das der Motor (105) aktuell liefern kann,
- Bestimmen einer aktuellen Momentanforderung, und
- fortlaufendes Steuern des Steuersignals an die hydraulische Vorrichtung (103) in Erwiderung auf die Differenz zwischen dem maximalen Moment und der Momentanforderung, und
- fortlaufendes Steuern des Steuersignals in Erwiderung auf die aktuelle Motordrehzahl, welche die höchste ist von der Motordrehzahl, die von dem Motorsteuersignal angezeigt ist, und der Motordrehzahl, die von dem hydraulischen Steuersignal angezeigt ist, ausgehend von dem gegenwärtigen angeforderten Fluss in der hydraulischen Vorrichtung (103), wodurch der Motor (105) durch den Vergleich mit einer Sicherheitsspanne von einem Abwürgen abgehalten wird.

2. Verfahren gemäß Anspruch 1, wobei das Steuersignal an die hydraulische Vorrichtung (103) ausgesetzt wird, falls die Differenz zwischen dem maximalen Moment und der Momentanforderung unterhalb eines Grenzwerts liegt.

3. Verfahren gemäß Anspruch 1 oder 2, wobei das Steuersignal an die hydraulische Vorrichtung (103) reduziert wird, falls die Differenz zwischen dem maximalen Moment und der Momentanforderung unterhalb eines Grenzwerts liegt.

4. Verfahren gemäß Anspruch 3, wobei das Steuersignal im Verhältnis zu der Differenz zwischen dem maximalen Moment und der Momentanforderung reduziert wird.

5. Verfahren gemäß einem der Ansprüche 2 bis 4, wobei die Grenzwerte von der aktuellen Motordrehzahl abhängen.

6. Steuereinheit zum Steuern eines Steuersignals an eine hydraulische Vorrichtung (103) eines Kraftfahrzeugs, das einen Motor (105) umfasst, wobei die hydraulische Vorrichtung (103) von einer hydraulischen Pumpe betrieben wird, die von dem Motor (105) angetrieben wird, wobei die Steuereinheit **dadurch gekennzeichnet ist, dass** sie umfasst:
- Mittel zum Empfangen eines aktuellen maximalen Moments, dass der Motor (105) aktuell liefern kann,
- Mittel zum Empfangen einer aktuellen Momentanforderung, und
- Mittel zum fortlaufenden Steuern des Steuersignals an die hydraulische Vorrichtung (103) in Erwiderung auf die Differenz zwischen dem maximalen Moment und der Momentanforderung, und
- Mittel zum fortlaufenden Steuern des Steuersignals in Erwiderung auf die aktuelle Motordrehzahl, welche die höchste ist von der Motordrehzahl, die von dem Motorsteuersignal angezeigt ist, und der Motordrehzahl, die von dem hydraulischen Steuersignal angezeigt ist, ausgehend von dem gegenwärtigen angeforderten Fluss in der hydraulischen Vorrichtung (103), wodurch der Motor (105) durch den Vergleich mit einer Sicherheitsspanne von einem Abwürgen abgehalten wird.

7. Steuervorrichtung gemäß Anspruch 6, umfassend Mittel zum Aussetzen des Steuersignals an die hydraulische Vorrichtung (103), falls die Differenz zwischen dem maximalen Moment und der Momentanforderung unterhalb eines Grenzwerts liegt.

8. Steuereinheit gemäß Anspruch 6 oder 7, umfassend Mittel zum Reduzieren des Steuersignals an die hydraulische Vorrichtung (103), falls die Differenz zwischen dem maximalen Moment und der Momentanforderung unter einem Grenzwert liegt.

9. Steuereinheit gemäß Anspruch 8, ferner umfassend Mittel zum Reduzieren des Steuersignals an die hydraulische Vorrichtung (103) im Verhältnis zu der Differenz zwischen dem maximalen Moment und der Momentanforderung.

10. Steuereinheit gemäß einem der Ansprüche 8 bis 9, ferner umfassend Mittel zum Festlegen des Grenzwerts in Abhängigkeit von der aktuellen Motordrehzahl.

11. Computerprogrammprodukt zum Steuern eines Steuersignals an eine hydraulische Vorrichtung (103) eines Kraftfahrzeugs, das einen Motor (105) umfasst, wobei die hydraulische Vorrichtung (103) von einer hydraulischen Pumpe betrieben wird, die von dem Motor (105) angetrieben wird, wobei das Computerprogrammprodukt Programmabschnitte umfasst, die einen Computer, wenn sie auf diesem ausgeführt werden, dazu veranlassen, die Schritte auszuführen:
- Bestimmen eines aktuellen maximalen Moments, das der Motor (105) aktuell liefern kann,
- Bestimmen einer aktuellen Momentanforderung, und
- fortlaufendes Steuern des Steuersignals an die hydraulische Vorrichtung (103) in Erwiderung auf die Differenz zwischen dem maximalen Moment und der Momentanforderung, und
- fortlaufendes Steuern des Steuersignals in Erwiderung auf die aktuelle Motordrehzahl, welche die höchste ist von der Motordrehzahl, die von dem Motorsteuersignal angezeigt ist, und der Motordrehzahl, die von dem hydraulischen Steuersignal angezeigt ist, ausgehend von dem gegenwärtigen angeforderten Fluss in der hydraulischen Vorrichtung (103), wodurch der Motor (105) durch den Vergleich mit einer Sicherheitsspanne von einem Abwürgen abgehalten wird.

12. Computerprogrammprodukt gemäß Anspruch 11, ferner umfassend Programmabschnitte zum Aussetzen des Steuersignals an die hydraulische Vorrichtung (103), falls die Differenz zwischen dem maximalen Moment und der Momentanforderung unterhalb eines Grenzwerts liegt.

13. Computerprogrammprodukt gemäß Anspruch 11 oder 12, ferner umfassend Programmabschnitte zum Reduzieren des Steuersignals an die hydraulische Vorrichtung (103), falls die Differenz zwischen dem maximalen Moment und der Momentanforderung unter einem Grenzwert liegt.

14. Computerprogrammprodukt gemäß Anspruch 13, ferner umfassend Programmabschnitte zum Reduzieren des Steuersignals an die hydraulische Vorrichtung (103) im Verhältnis zu der Differenz zwischen dem maximalen Moment und der Momentanforderung.

15. Computerprogrammprodukt gemäß einem der Ansprüche 12 bis 14, ferner umfassend Programmabschnitte Festlegen des Grenzwerts in Abhängigkeit von der aktuellen Motordrehzahl.

16. Digitales Speichermedium, welches das Computerprogrammprodukt gemäß einem der Ansprüche 11 bis 15 auf sich gespeichert hat.

## Revendications

1. Procédé de commande d'un signal de commande d'un dispositif hydraulique (103) d'un véhicule motorisé comprenant un moteur (105), le dispositif hydraulique (103) étant actionné par une pompe hydraulique entraînée par le moteur (105), le procédé étant **caractérisé en ce qu'**il comprend les étapes de :
- déterminer un couple maximal actuel que le moteur (105) peut présentement délivrer,
- déterminer une demande de couple actuelle, et
- commander de façon continue le signal de commande du dispositif hydraulique (103) en réponse à la différence entre le couple maximal et la demande de couple, et
- commander de façon continue le signal de commande en réponse à la vitesse actuelle du moteur, qui est la plus élevée de la vitesse du moteur indiquée par le signal de commande du moteur et de la vitesse du moteur indiquée par le signal de commande du dispositif hydraulique à partir du flux actuel demandé dans le dispositif hydraulique (103), et, par conséquent, par comparaison avec une marge de sécurité empêchant le moteur (105) de caler.

2. Procédé selon la revendication 1, dans lequel, si la différence entre le couple maximal et la demande de couple est inférieure à une valeur de seuil, le signal de commande du dispositif hydraulique (103) est suspendu.

3. Procédé selon la revendication 1 ou 2, dans lequel, si la différence entre le couple maximal et la demande de couple est inférieure à une valeur de seuil, le signal de commande du dispositif hydraulique (103) est diminué d'échelle.

4. Procédé selon la revendication 3, dans lequel le signal de commande est diminué d'échelle proportionnellement à la différence entre le couple maximal et la demande de couple.

5. Procédé selon l'une quelconque des revendications 2 à 4, dans lequel les valeurs de seuil dépendent de la vitesse actuelle du moteur.

6. Dispositif de commande pour commander un signal de commande d'un dispositif hydraulique (103) d'un véhicule motorisé comprenant un moteur (105), le dispositif hydraulique (103) étant actionné par une pompe hydraulique entraînée par le moteur (105), le dispositif de commande étant **caractérisé par** le fait (111) qu'il comprend :
- des moyens pour recevoir un couple maximal actuel que le moteur (105) peut présentement délivrer,
- des moyens pour recevoir une demande de couple actuelle, et
- des moyens pour commander de façon continue le signal de commande du dispositif hydraulique (103) en réponse à la différence entre le couple maximal et la demande de couple, et
- des moyens pour commander de façon continue le signal de commande en réponse à la vitesse actuelle du moteur, qui est la plus élevée de la vitesse du moteur indiquée par le signal de commande du moteur et de la vitesse du moteur indiquée par le signal de commande du dispositif hydraulique à partir du flux actuel demandé dans le dispositif hydraulique (103), et, par conséquent, par comparaison avec une marge de sécurité empêchant le moteur (105) de caler.

7. Dispositif de commande selon la revendication 6, comprenant des moyens pour suspendre le signal de commande du dispositif hydraulique (103) si la différence entre le couple maximal et la demande de couple est inférieure à une valeur de seuil.

8. Dispositif de commande selon la revendication 6 ou 7, comprenant des moyens pour diminuer d'échelle le signal de commande du dispositif hydraulique (103) si la différence entre le couple maximal et la demande de couple est inférieure à une valeur de seuil.

9. Dispositif de commande selon la revendication 8, comprenant de plus des moyens pour diminuer d'échelle le signal de commande du dispositif hydraulique (103) proportionnellement à la différence entre le couple maximal et la demande de couple.

10. Dispositif de commande selon l'une quelconque des revendications 8 à 9, comprenant de plus des moyens pour établir les valeurs de seuil en fonction de la vitesse actuelle du moteur.

11. Produit de programme informatique pour commander un signal de commande d'un dispositif hydraulique (103) d'un véhicule motorisé comprenant un moteur (105), le dispositif hydraulique (103) étant actionné par une pompe hydraulique entraînée par le moteur (105), le produit de programme informatique comprenant des segments de programme qui, lorsqu'ils sont exécutés sur un ordinateur, provoquent l'exécution par l'ordinateur des étapes de :
- déterminer un couple maximal actuel que le moteur (105) peut présentement délivrer,
- déterminer une demande de couple actuelle, et
- commander de façon continue le signal de commande du dispositif hydraulique (103) en réponse à la différence entre le couple maximal et la demande de couple, et
- commander de façon continue le signal de commande en réponse à la vitesse actuelle du moteur, qui est la plus élevée de la vitesse du moteur indiquée par le signal de commande du moteur et de la vitesse du moteur indiquée par le signal de commande du dispositif hydraulique à partir du flux actuel demandé dans le dispositif hydraulique (103), et, par conséquent, par comparaison avec une marge de sécurité empêchant le moteur (105) de caler.

12. Produit de programme informatique selon la revendication 11, comprenant de plus des segments de programme pour suspendre le signal de commande du dispositif hydraulique (103) si la différence entre le couple maximal et la demande de couple est inférieure à une valeur de seuil.

13. Produit de programme informatique selon la revendication 11 ou 12, comprenant de plus des segments de programme pour diminuer d'échelle le signal de commande du dispositif hydraulique (103) si la différence entre le couple maximal et la demande de couple est inférieure à une valeur de seuil.

14. Produit de programme informatique selon la revendication 13, comprenant de plus des segments de programme pour diminuer d'échelle le signal de commande du dispositif hydraulique (103) proportionnellement à la différence entre le couple maximal et la demande de couple.

15. Produit de programme informatique selon l'une quelconque des revendications 12 à 14, comprenant de plus des segments de programme pour établir les valeurs de seuil en fonction de la vitesse actuelle du moteur.

16. Support de mémorisation numérique comportant le produit de programme informatique selon l'une quelconque des revendications 11 à 15 mémorisé sur celui-ci.
